(19) Europäisches Patentamt European Patent Office Office européen des brevets

(11) **EP 3 175 207 B1**

(12) **EUROPÄISCHE PATENTSCHRIFT**

(45) Veröffentlichungstag und Bekanntmachung des Hinweises auf die Patenterteilung:
**25.08.2021 Patentblatt 2021/34**

(21) Anmeldenummer: **15727965.4**

(22) Anmeldetag: **08.06.2015**

(51) Int Cl.:
***G01L 19/06*** *(2006.01)*

(86) Internationale Anmeldenummer:
**PCT/EP2015/062708**

(87) Internationale Veröffentlichungsnummer:
**WO 2016/015907 (04.02.2016 Gazette 2016/05)**

(54) **DRUCKMITTLER UND DRUCKSENSOR MIT DRUCKMITTLER**

DIAPHRAGM SEAL AND PRESSURE SENSOR HAVING A DIAPHRAGM SEAL

TRANSMETTEUR DE PRESSION ET CAPTEUR DE PRESSION MUNI D'UN TRANSMETTEUR DE PRESSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.07.2014 DE 102014110615**

(43) Veröffentlichungstag der Anmeldung:
**07.06.2017 Patentblatt 2017/23**

(73) Patentinhaber: **Endress+Hauser SE+Co. KG 79689 Maulburg (DE)**

(72) Erfinder:
• **BECHER, Raimund 79238 Ehrenkirchen (DE)**

• **SALG, Dietmar 79650 Schopfheim/Gersbach (DE)**

(74) Vertreter: **Andres, Angelika Maria Endress+Hauser Group Services (Deutschland) AG+Co. KG Colmarer Straße 6 79576 Weil am Rhein (DE)**

(56) Entgegenhaltungen:

| | |
|---|---|
| CN-Y- 2 802 486 | DE-A1- 3 630 618 |
| DE-A1- 10 133 065 | DE-A1- 10 157 240 |
| DE-A1-102006 049 942 | DE-U- 1 631 638 |
| DE-U1- 20 006 226 | GB-A- 640 154 |
| US-A- 3 371 537 | US-A1- 2013 263 678 |

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung bezieht sich auf eine Druckmittler zum Übertragen eines Mediendrucks und einen Drucksensor mit einem solchen Druckmittler.

Druckmittler zum Übertragen eines Mediendrucks umfassen gewöhnlich einen Druckmittlerkörper bzw. einen Membranträgerkörper mit einer medienseitigen Oberfläche, und eine Trennmembran, die unter Ausbildung einer Druckkammer zwischen der Trennmembran und dem Druckmittlerkörper entlang zumindest eines Randes druckdicht mit dem Druckmittlerkörper verbunden ist, wobei sich von der Druckkammer ein Kanal durch den Druckmittlerkörper erstreckt, und die Druckkammer, und der Kanal mit einer Übertragungsflüssigkeit gefüllt sind, um einen an der Trennmembran anstehende Mediendruck zu einem Druckempfänger zu übertragen. Der Druckempfänger kann beispielsweise eine Druckmesszelle, die zwischen zwei Prozessanschlussflanschen eingespannt ist, eine weitere Trennmembran, oder eine an den Kanal anschließende Kapillarleitung sein.

Derartige Druckmittler werden typischerweise bei extrem heißen und kalten Anwendungen eingesetzt, um den Druckempfänger von der Prozessumgebung wärmetechnisch zu trennen. Der Druckmittler erfüllt diese Funktion, indem er den Druckempfänger durch ein mit Übertragungsflüssigkeit gefülltes Kapillarsystem, das in eine Kühlstrecke eingebracht ist, vom Prozessmedium trennt. Ein derartiger Druckmittler ist beispielsweise aus der DE 10 2006 04994 bekannt.

Hierzu sind aus dem Stand der Technik Aufbauten von Druckmittlern bekannt, die eine Vielzahl von Bauteilen aufweisen. Diese sind ein Kapillarrohr, ein Basiskörper sowie zwei Kapillarrohradapter. Das länglich gebogene Kapillarrohr ist an seinem ersten Ende mittels des ersten Kapillarrohradapters mit dem Membranträgerkörper und an seinem zweiten Ende mittels des zweiten Kapillarrohradapters mit dem Druckempfänger verbunden. Da das Kapillarrohr nur wenige Millimeter Außendurchmesser aufweist und so mechanisch wenig stabil ist, wird mittels eines Basiskörpers, typischerweise eines U-Stahlträgers, der an seinem ersten Ende an den Membranträgerkörper und mit seinem zweiten Ende seitlich an einen Prozessanschlussflansch geschweißt wird, der Aufbau mechanisch stabilisiert. Das Kapillarrohr ist bei diesem Aufbau so gebogen, dass es typischerweise eine S-Form aufweist und ausgehend von dem ersten Ende einen ersten Biegeradius und am zweiten Ende einen zweiten Biegeradius aufweist, wobei die Kapillare im Bereich zwischen den beiden Biegeradien im Wesentlichen geradlinig im U-Stahlträger, d.h. zwischen dessen Flanschen, verläuft und so geschützt wird. Der U-Stahlträger dient der mechanischen Stabilität und wird auf dem Membranträgerkörper mit seiner Stirnseite händisch bzw. manuell angeschweißt und am gegenüberliegenden Ende wird der U-Stahlträger entlang der beiden Flansche des U-Profils ebenfalls händisch bzw. manuell seitlich an den Prozessanschlussflansch angeschweißt, umso eine erhöhte mechanische Stabilität im Bereich der Schweißung zu erzielen.

Derartige Druckmittler bedingen also einen extrem komplexen mechanischen Aufbau, da der Druckmittler aus vier Einzelelementen aufgebaut ist und zudem der U-Stahlträger aufwendig händische bzw. manuell an den Membranträgerkörper und den Prozessanschlussflansch angeschweißt werden muss. Das händische bzw. manuelle Schweißen birgt zusätzlich die Gefahr, dass die Schweißnaht kleine Spalten bzw. Löcher aufweist, da der Innenbereich des U-Stahlträgers beim Anschweißen auf den Membranträgerkörper und/oder Druckempfänger nur schwer zugänglich ist. Die so in der Schweißnaht entstandenen Spalten und Löcher stellen anschließend beim jahrelangen Betrieb des Druckmittlers (unter zum Teil extremen äußerlichen Witterungsbedingungen) potentielle Korrosionsangriffspunkte dar.

Nachteilig an dem Aufbau ist ebenfalls, dass die Schwingungsachse des Gesamtsystems, also des Druckmittlers mit dem Membranträgerkörper und der Druckmesszelle, die zwischen zwei Prozessanschlussflächen eingespannt ist, relativ weit entfernt vom Schwerpunkt des Gesamtsystems ist. Dies führt zu einer relativ hohen Unwucht, die schädliche Vibrationen und erhöhten Verschleiß zur Folge hat.

Ferner weisen die aus dem Stand der Technik bekannten Druckmittler den Nachteil auf, dass sie nur schwer reinigbar sind, da bedingt durch den U-Stahlträger gerade die innenliegenden Bereiche nicht gut zugänglich sind. Gerade bei der Verwendung derartiger Druckmittler im Bereich der Biotechnologie und der Chemie kommt der einfachen Reinigung jedoch eine bedeutende Rolle zu.

Es ist daher die Aufgabe der Erfindung, einen Druckmittler bereitzustellen, der die beschriebenen Nachteile des Standes der Technik überwindet.

Die Aufgabe wird durch einen Druckmittler und einen Drucksensor mit einem solchen Druckmittler gelöst.

Hinsichtlich des Druckmittlers wird die Aufgabe erfindungsgemäß durch einen Druckmittler zum Übertragen eines Mediendrucks gelöst, umfassend:

- einen metallischen Membranträgerkörper mit einer medienseitigen Oberfläche und einer Trennmembran, die unter Ausbildung einer Druckkammer zwischen der Trennmembran und dem Membranträgerkörper entlang zumindest eines Randes druckdicht mit dem Membranträgerkörper verbunden ist, und

- einen metallischen, insbesondere axialsymmetrischen, Temperaturentkopplungskörper mit einer ersten Stirnseite und einer von der ersten Stirnseite abgewandten zweiten Stirnseite, sowie einem zwischen der ersten und zweiten Stirnseite verlaufenden Kanal, der mit einer Übertragungsflüssigkeit gefüllt oder befüllbar ist, um die Druckkammer des an die erste Stirnseite angebundenen Membranträgerkörpers mit einem an der zweiten Stirnseite anschließbaren Druckempfänger zu verbinden, sodass ein an der Trennmembran anstehender Mediendruck zu dem Druckempfänger übertragbar ist, wobei in einem Abschnitt des Temperaturentkopplungskörpers an der Oberseite bzw. Oberfläche mehrere, insbesondere wellenförmige, aufeinanderfolgende Kühlrippen ausgebildet sind, um Wärme abzustrahlen, und wobei ferner der minimal auftretende Querschnittsdurchmesser des Temperaturentkopplungskörpers zwischen den in dem Abschnitt aufeinander folgenden Kühlrippen von der ersten Stirnseite zu der zweiten Stirnseite abnimmt.

Erfindungsgemäß wird also ein Druckmittler vorgeschlagen, bei dem der Temperaturentkopplungskörper aus einem einzigen Stück fertigbar ist und der in einem Abschnitt mehrere Kühlrippen aufweist, wobei in dem Abschnitt der minimal auftretende Querschnittsdurchmesser zumindest zwischen zwei aufeinanderfolgenden Kühlrippen von der ersten Stirnseite, die dem Membranträgerkörper zugewandt ist und der zweiten Stirnseite, die dem Druckempfänger zugeordnet ist, abnimmt. Typischerweise nimmt der minimal auftretende Querschnittsdurchmesser entlang der radialen Symmetrieachse von der ersten Stirnseite zu der zweiten Stirnseite monoton ab. Als minimal auftretender Querschnittsdurchmesser sei dabei der Durchmesser verstanden, der zwischen zwei Kühlrippen an der tiefsten Verengung bzw. Einsenkung auftritt, wobei der vor der ersten Kühlrippe zur ersten Stirnseite hin und nach der letzten Kühlrippe zur zweiten Stirnseite hin auftretende Durchmesser ebenfalls dazu zählt. Durch dieses "Tannenbaumprofil" kann ein schwingungsresisitver Aufbau realisiert werden, da im Bereich der maximal auftretenden mechanischen Belastung ein größerer Querschnittsdurchmesser und somit eine größere Querschnittsfläche vorhanden ist, die für eine Entlastung sorgen.

Dadurch dass sich der Temperaturentkopplungskörper aus einem Stück fertigen lässt, ergeben sich ebenfalls in vorteilhafter Weise kürzere und/oder einfachere Fertigungszeiten und damit verbunden geringere Kosten. Durch den erfindungsgemäßen Aufbau, insbesondere den axialsymmetrischen Temperaturentkopplungskörper lässt sich dieser in einem automatisierten Schweißvorgang sowohl an den Membranträgerkörper als auch an den Druckempfänger anschweißen. Durch den automatisierten Schweißvorgang können kleine Spalten und/oder Löcher in der Schweißnaht vermieden werden und so die eingangs erwähnten Nachteile vermieden werden.

Ein weiterer Vorteil des erfindungsgemäßen Druckmittlers ist die einfache Reinigbarkeit, da dieser keine schwer zugänglichen Bereiche mehr aufweist. Eine vorteilhafte Ausgestaltung sieht vor, dass an der ersten Stirnfläche ein erster Absatz ist, der einen ersten Durchmesser aufweist und an der zweiten Stirnfläche ein zweiter Absatz ist, der einen zweiten Durchmesser aufweist, wobei der erste und der zweite Durchmesser unterschiedlich sind.

Eine weitere vorteilhafte Ausgestaltung sieht vor, dass der Kanal einen Durchmesser aufweist, der im Bereich von 0,5 mm bis 2,5 mm, bevorzugt im Bereich von 1 mm bis 2 mm liegt.

Eine weitere vorteilhafte Ausgestaltung sieht vor, dass der am Scheitelpunkt einer jeden Kühlrippe auftretende maximale Querschnittsdurchmesser des Temperaturentkopplungskörpers für jede Kühlrippe gleich ist.

Eine weitere vorteilhafte Ausgestaltung sieht vor, dass das Verhältnis zwischen der Länge des Kanals und dem Durchmesser des Kanals mindestens 50:1, bevorzugt 100:1 und besonders bevorzugt 200:1 beträgt.

Eine weitere vorteilhafte Ausgestaltung sieht vor, dass das Verhältnis zwischen der Länge des Temperaturentkopplungskörpers und dem maximal auftretenden Querschnittsdurchmesser des Temperaturentkopplungskörpers mindestens 2:1, bevorzugt 3:1 und besonders bevorzugt 5:1 beträgt.

Hinsichtlich des Drucksensors wird die Aufgabe erfindungsgemäß durch einen Drucksensor gelöst, der zumindest folgendes umfasst:

- einen Druckmittler wie er in einer der zuvor beschriebenen Ausführungsformen beschrieben ist;
- zwei im Wesentlichen quaderförmige Prozessanschlussflansche; und
- zumindest eine zwischen den zwei Prozessanschlussflanschen befindliche Druckmesszelle, wobei die Druckmesszelle derartig an den Druckmittler angebunden ist, dass die über den Kanal des Druckmittlers zugeführte Übertragungsflüssigkeit über einen in einem der beiden Prozessanschlussflansche befindlichen Einlasskanal und eine Einlasskammer der Druckmesszelle zugeführt oder zuführbar ist, umso anhand des übermittelten Mediendrucks ein druckabhängiges Signal zu erzeugen.

Eine vorteilhafte Ausgestaltung des Drucksensors sieht vor, dass der Druckmittler im Wesentlichen mittig an einer der Prozessanschlussflanschflächen angeschweißt ist.

Eine weitere vorteilhafte Ausgestaltung des Drucksensors sieht vor, dass der Prozessanschlussflansch über den der Druckmittler an die Druckmesszelle angebunden ist zumindest in dem Bereich wo der Druckmittler an den Prozessanschlussflansch angeschweißt ist eine verstärkte Wanddicke aufweist.

Eine weitere vorteilhafte Ausgestaltung des Drucksensors sieht vor, dass die Druckmesszelle eine Absolutdruckmesszelle, eine Relativdruckmesszelle oder eine Differenzdruckmesszelle ist.

Eine weitere vorteilhafte Ausgestaltung des Drucksensors sieht vor, dass der sich in dem Prozessanschlussflansch befindlichen Einlasskanal spezifisch zur Anbindung des Druckmittlers vorgesehen ist.

Die Erfindung wird anhand der nachfolgenden Zeichnungen näher erläutert. Es zeigt:

Fig. 1: einen Längsschnitt durch einen erfindungsgemäßen Druckmittler,

Fig. 2a: eine erste Seitenansicht einer ersten Ausgestaltung des erfindungsgemäßen Drucksensors,

Fig. 2b: eine zweite Seitenansicht der ersten Ausgestaltung des erfindungsgemäßen Drucksensors,

Fig. 3: eine Explosionsdarstellung der ersten Ausgestaltung des erfindungsgemäßen Drucksensors,

Fig. 4a: eine erste Seitenansicht einer zweiten Ausgestaltung des erfindungsgemäßen Drucksensors,

Fig. 4b: eine zweite Seitenansicht der zweiten Ausgestaltung des erfindungsgemäßen Drucksensors, und

Fig. 5: eine Explosionsdarstellung der zweiten Ausgestaltung des erfindungsgemäßen Drucksensors.

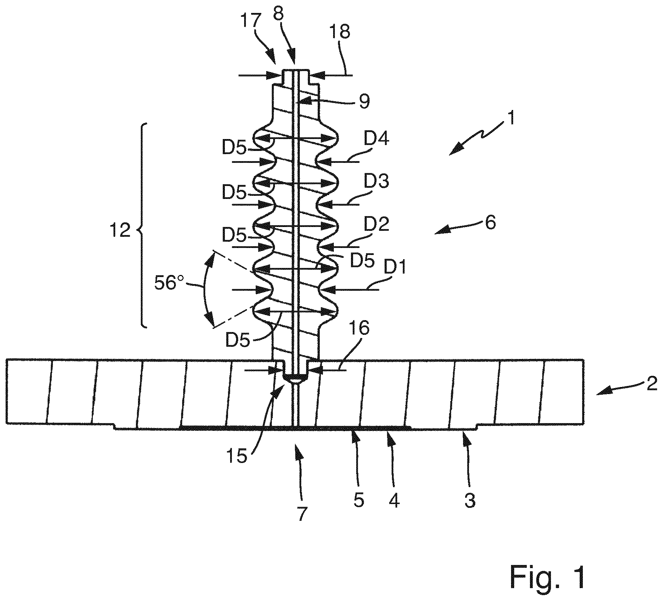

Der in Fig. 1 gezeigte erfindungsgemäße Druckmittler 1 umfasst einen metallischen Membranträgerkörper 2 und einen Temperaturentkopplungskörper 6 der als Drehteil aus einem Stück Edelstahl gefertigt ist und im Wesentlichen axialsymmetrisch ist. Der metallische Membranträgerkörper 2 hat eine medienseitige Oberfläche 3 und eine Trennmembran 4, die unter Ausbildung einer Druckkammer 5 zwischen der Trennmembran 4 und dem Membranträgerkörper 2 entlang zumindest eines Randes druckdicht mit dem Membranträgerkörper 2 verbunden ist.

Der metallische Temperaturentkopplungskörper 6 hat eine erste Stirnseite 7 und eine zweite Stirnseite 8, die von der ersten Stirnseite 7 abgewandt ist. An der ersten Stirnseite 7 umfasst der Temperaturentkopplungskörper 6 einen ersten Absatz 15 mit einem ersten Durchmesser 16. Mit diesem Absatz 15 greift der Temperaturentkopplungskörper 6 in den Membranträgerkörper 2, der eine Aussparung entsprechend dem ersten Durchmesser 16 des ersten Absatzes 15 hat, ein. An der zweiten Stirnseite 8 weist der Temperaturentkopplungskörper 6 ebenfalls einen zweiten Absatz 17 mit einem zweiten Durchmesser 18 auf. Beide Absätze 15, 17 sind dabei so gefertigt, dass sie unterschiedliche Durchmesser besitzen und so ein ungewolltes Vertauschen der Einbaurichtung des Temperaturentkopplungskörpers 6 in Bezug auf den Membranträgerkörper 2 und einen Druckempfänger, der an der zweiten Stirnseite 8 angeordnet ist, vermieden wird.

Ferner umfasst der Temperaturentkopplungskörper 6 einen zwischen der ersten Stirnseite 7 und der zweiten Stirnseite 8 verlaufenden Kanal 9, der typischerweise mittels einer Bohrung oder Erodierens gefertigt ist. Der Kanal 9 weist typischerweise einen Durchmesser von 1 mm auf, da der Druckmittler 1 bei einem derartigen Durchmesser des Kanales 9 eine erhöhte Messperformance aufgrund des geringen Volumens der Übertragungsflüssigkeit besitzt.

Gegebenenfalls kann der Durchmesser des Kanals 9 aber auch angepasst werden, sodass er im Bereich von 0,5mm bis 2,5 mm liegt. Der Kanal 9 ist mit einer Übertragungsflüssigkeit befüllt und verbindet somit die Druckkammer 5 des Membranträgerkörpers 2 mit dem Druckempfänger, umso einen an der Trennmembran 4 anstehenden Mediendruck zu dem Druckempfänger zu übertragen.

Erfindungsgemäß weist der Temperaturentkopplungskörper 6 mehrere Kühlrippen 13 auf, über die zumindest eine teilweise Temperaturentkopplung zwischen der heißen Temperatur des Mediums und der Temperatur des Druckempfängers erfolgt. In der in Fig. 1 dargestellten Ausführungsform sind es fünf Kühlrippen 13. Die Anzahl der Kühlrippen ist aber variabel an die entsprechende Anwendung anpassbar und kann somit von den gezeigten fünf Kühlrippen 13 abweichen. Der Temperaturentkopplungskörper 6 ist dabei so gefertigt, dass der erste minimal auftretende Querschnittsdurchmesser $D_1$ bei der ersten Verengung, entlang der von der ersten zur zweiten Stirnseite verlaufenden Symmetrieachse, maximal ist und der minimal auftretende Querschnittsdurchmesser zur zweiten Stirnseite hin abnimmt, so dass sich folgende Beziehung ergibt:

$$D_1 > D_2 > D_3 > D_4.$$

Die Kühlrippen 13 sind in den im Wesentlichen axialsymmetrischen Temperaturentkopplungskörper 6 hinein gedreht, sodass sich eine wellenförmige Ausgestaltung der Oberfläche im Bereich der Kühlrippen 13 ergibt. In der in Fig. 1 gezeigten Konfiguration weisen die Kühlrippen 13 einen Öffnungswinkel von 56° auf, sodass sie problemlos an jeder Stelle zugänglich sind und eine vereinfachte Reinigung ermöglichen.

Die Kühlrippen 13 weisen ferner einen am Scheitelpunkt der Kühlrippe 13 auftretenden maximalen Querschnittsdurchmesser $D_{max}$ auf, der für jede der Kühlrippen im Wesentlichen gleich ist.

Der Temperaturentkopplungskörper 6 hat in axialer Richtung, also von der ersten Stirnseite 7 zur zweiten Stirnseite 8 hin, eine Länge von in etwa 100 mm. Entsprechend hat der Kanal 9 ebenfalls eine Länge von in etwa 100 mm. Der Durchmesser des Kanals 9 ist ca. 2 mm. Der maximal auftretende Querschnittsdurchmesser $D_{max}$, welcher dem Außendurchmesser des Temperaturentkopplungskörper 6 entspricht, beträgt in etwa 30 mm. Denkbar sind natürlich auch andere Dimensionen.

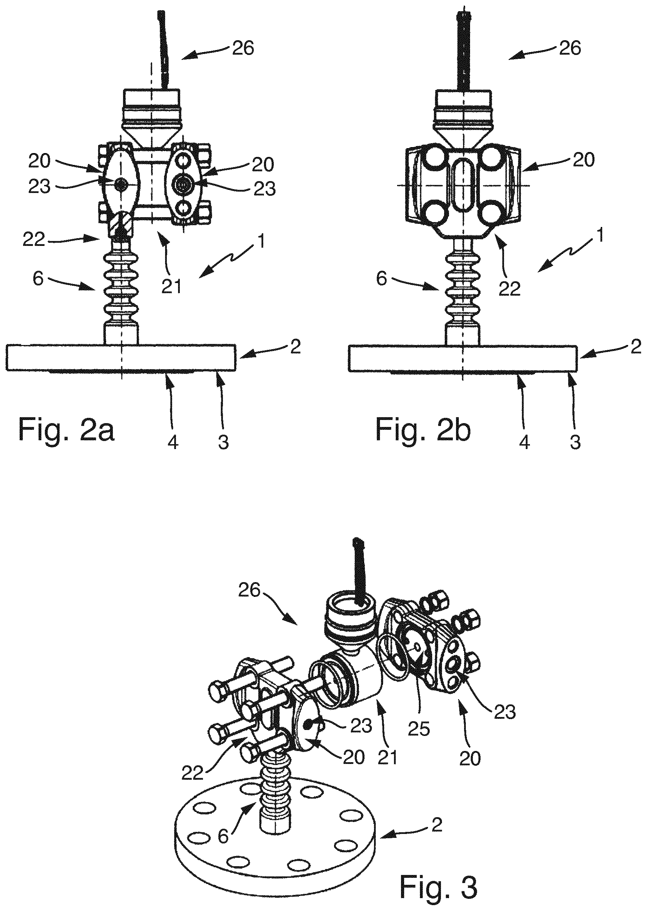

Fig. 2a zeigt eine erste Seitenansicht einer ersten Ausgestaltung des erfindungsgemäßen Drucksensors 26 und Fig. 2b eine zweite Seitenansicht dieser Ausgestaltung des erfindungsgemäßen Drucksensors 26. Der Drucksensor 26 umfasst dabei einen erfindungsgemäßen Druckmittler 1, eine Druckmesszelle 21 und zwei Prozessanschlussflansche 20, die im Wesentlichen quaderförmig und entsprechend der Norm DIN EN 61518 aus dem Jahr 2002 ausgebildet sind. Die Druckmesszelle 21, die beispielsweise eine Absolutdruckmesszelle, eine Relativdruckmesszelle oder eine Differenzdruckmesszelle sein kann, ist zwischen den beiden Prozessanschlussflanschen 20 eingespannt.

Der Druckmittler 1 ist dabei an einen der beiden Prozessanschlussflansche 20 angeschweißt, wobei dieser Prozessanschlussflansch 20 derartig präpariert ist, dass er an der Anschweißstelle zusätzliches Material 22 im Vergleich zu einem Standard-Prozessanschlussflansch aufweist, sodass diese Seitenfläche des Prozessanschlussflansches 20 eine im Wesentlichen ambossförmige Ausprägung 22 aufweist. An der Seitenfläche mit der ambossförmigen Ausprägung 22 ist der Druckmittler 1 im Wesentlichen mittig angeschweißt. Der Prozessanschlussflansch 20 weist einen spezifischen Einlasskanal 24 und eine Einlasskammer 25 auf (beide in Fig. 2a und Fig. 2b nicht dargestellt), über die die Übertragungsflüssigkeit der Druckmesszelle 21 zugeführt wird. Auf diese Weise wird der Mediendruck übermittelt und ein druckabhängiges Signal wird erzeugt. Wie in Fig. 2a gut zu erkennen, weisen die Prozessanschlussflansche 20, die entsprechend der Norm DIN EN 61518 aus dem Jahr 2002 ausgebildet sind, mehrere Wirkdruckleitungsanschlüsse 23 auf.

Erfindungsgemäß ist der Druckmittler 1 aber nicht über einen dieser Wirkdruckleitungsanschlüsse 23 an die Druckmesszelle 21 angebunden, sondern über den spezifischen Einlasskanal 24, der sich zusätzlich in dem Prozessanschlussflansch 20 befindet, da eine Anbindung über einen der Wirkdruckleitungsanschlüsse 23 ein zu großes Totvolumen erzeugen würde und so die Messperformance des Drucksensors 26 abnehmen würde.

Fig. 3 zeigt eine Explosionsdarstellung der ersten Ausgestaltung des erfindungsgemäßen Drucksensors 26. Der Drucksensor 26 umfasst dabei wiederum eine Druckmesszelle 21, die zwischen den zwei Prozessanschlussflanschen 20 einspannbar ist, sowie den Druckmittler 1, der an einen der beiden Prozessanschlussflansche 20 angeschweißt ist. Der Aufbau entspricht somit den Ausführungen in den Figurenbeschreibungen zu Fig. 2a und Fig. 2b.

Beide Prozessanschlussflansche 20 sind, wie bereits erwähnt, gemäß der Norm DIN EN 61518 aus dem Jahr 2002 ausgebildet. Beide Prozessanschlussflansche 20 weisen somit Wirkdruckleitungsanschlüsse 23 und jeweils eine Einlasskammer 25 auf. In Fig. 3 ist die Einlasskammer 25 des Prozessanschlussflansches 20 an der Druckmittler 1 angeschweißt ist, nicht sichtbar, da diese verdeckt ist. Die Einlasskammer 25 des Prozessanschlussflansches 20 an der Druckmittler 1 angeschweißt ist, ist aber analog der in Fig.3 sichtbaren Einlasskammer 25 des Prozessanschlussflansches 20 (an dem der Druckmittler nicht angeschweißt ist) ausgebildet. Zusätzlich weist der Prozessanschlussflansch 20, an den der Druckmittler 1 angeschweißt ist, den spezifischen Einlasskanal 24 auf. Über den spezifischen Einlasskanal 24 wird die Übertragungsflüssigkeit der Einlasskammer 25 und somit der Druckmesszelle 21 zugeführt. Der spezifische Einlasskanal 24 entspricht somit nicht den standardisierten Wirkdruckleitungsanschlüssen 23, sondern einem eigenen bzw. eigenständigem Anschluss, der zur fluidischen Anbindung des Druckmittlers 1 dient.

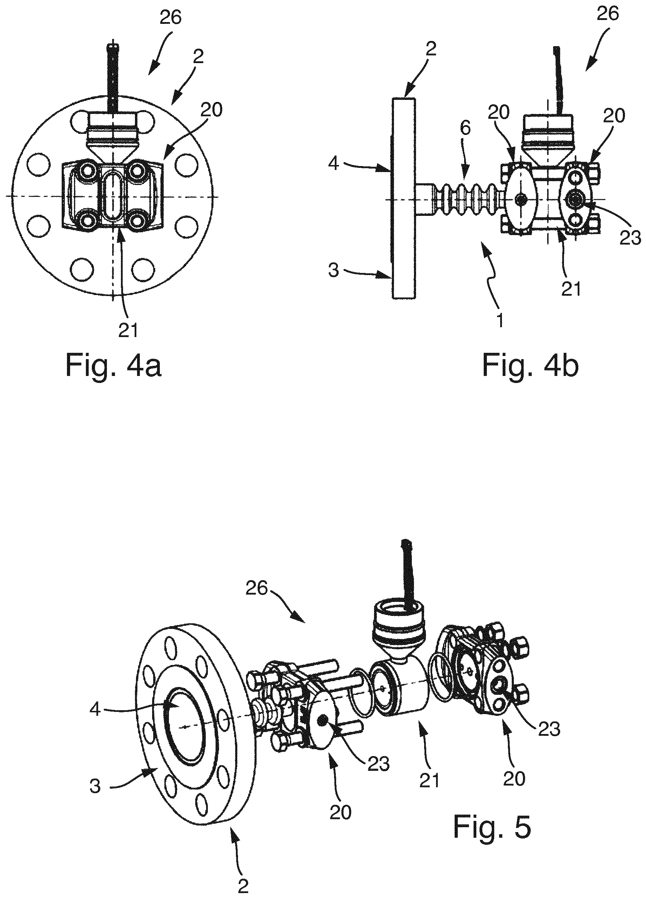

Fig. 4a und Fig. 4b zeigen eine erste und zweite Seitenansicht einer zweiten Ausgestaltung des erfindungsgemäßen Drucksensors 21. Hierbei unterscheidet sich die Position an der der Druckmittler 1 angeschweißt ist. In der zuvor beschrieben ersten Ausgestaltung ist der Druckmittler 1 an einer der Seitenflächen des Prozessanschlussflansches 20 angeschweißt, wohingegen in der zweiten Ausgestaltung der Druckmittler 1 an einer Hauptfläche des Prozessanschlussflansches 20 angeschweißt ist. Als Hauptfläche des im Wesentlichen quaderförmigen Prozessanschlussflansches 20 kann hierbei, wenn man den Prozessanschlussflansch 20 als Quader betrachtet, eine der beiden Flächen verstanden werden, die den größten Flächeninhalt aufweisen. Als Seitenflächen können somit eine der vier verbleibenden Flächen verstanden werden, deren Flächeninhalt geringer bzw. kleiner ist, als der der Hauptflächen.

Das Anschweißen des Druckmittlers 1 an eine Hauptfläche des Prozessanschlussflansches 20 bietet den Vorteil, dass sich ein noch besseres Verhältnis des Schwerpunktes des Drucksensors 21 zur Schwingungsachse des Drucksensors 21 ergibt. Darüber hinaus ergibt sich in vorteilhafterweise ebenfalls, dass ein nochmals geringeres Übertragungsflüssigkeitsvolumen im Vergleich zur ersten Ausgestaltung (und natürlich dem Stand der Technik) benötigt wird. Dies führt wiederum zu einer erhöhten Messperformance des Drucksensors 26.

Fig. 5 zeigt eine Explosionsdarstellung der zweiten Ausgestaltung des erfindungsgemäßen Drucksensors 26 umfassend den Druckmittler 1, die Druckmesszelle 21, die zwischen den beiden Prozessanschlussflanschen 20 einspannbar ist.

**Bezugszeichenliste**

| | |
|---|---|
| 1 | Druckmittler |
| 2 | Membranträgerkörper |
| 3 | Medienseitige Oberfläche |
| 4 | Trennmembran |
| 5 | Druckkammer |
| 6 | Temperaturentkopplungskörper |
| 7 | Erste Stirnseite |
| 8 | Zweite Stirnseite |
| 9 | Kanal |
| 10 | Übertragungsflüssigkeit |
| 11 | Druckempfänger |
| 12 | Abschnitt |
| 13 | Kühlrippe, insbesondere aufeinanderfolgende |

Kühlrippen

14   Minimal auftretende Querschnittsdurchmesser
15   Erster Absatz
16   Erster Durchmesser
17   Zweiter Absatz
18   Zweiter Durchmesser
19   Scheitelpunkt der Kühlrippen
20   Prozessanschlussflansche
21   Druckmesszelle
22   Zusätzliches Material bzw. ambossförmige Ausprägung
23   Wirkdruckleitungsanschlüsse
24   Einlasskanal
25   Einlasskammer
26   Drucksensor
$D_1$   Erster minimal auftretender Querschnittsdurchmesser
$D_2$   Zweiter minimal auftretender Querschnittsdurchmesser
$D_3$   Dritter minimal auftretender Querschnittsdurchmesser
$D_4$   Vierter minimal auftretender Querschnittsdurchmesser
$D_{max}$   Maximal auftretender Querschnittsdurchmesser

**Patentansprüche**

1.   Druckmittler (1) zum Übertragen eines Mediendrucks, umfassend:

- einen metallischen Membranträgerkörper (2) mit einer medienseitigen Oberfläche (3) und einer Trennmembran (4), die unter Ausbildung einer Druckkammer (5) zwischen der Trennmembran (4) und dem Membranträgerkörper (2) entlang zumindest eines Randes druckdicht mit dem Membranträgerkörper (2) verbunden ist, und
- einen metallischen, insbesondere axialsymmetrischen, Temperaturentkopplungskörper (6) mit einer ersten Stirnseite (7) und einer von der ersten Stirnseite (7) abgewandten zweiten Stirnseite (8), sowie einem zwischen der ersten und zweiten Stirnseite verlaufenden Kanal (9), der mit einer Übertragungsflüssigkeit (10) gefüllt oder befüllbar ist, um die Druckkammer (5) des an die erste Stirnseite angebundenen Membranträgerkörpers (2) mit einem an der zweiten Stirnseite (8) anschließbaren Druckempfänger (11) zu verbinden, sodass ein an der Trennmembran (4) anstehender Mediendruck zu dem Druckempfänger (11) übertragbar ist, wobei in einem Abschnitt (12) des Temperaturentkopplungskörpers (6) an der Oberseite bzw. Oberfläche mehrere, insbesondere wellenförmige, aufeinanderfolgende Kühlrippen (13) ausgebildet sind, um Wärme abzustrahlen, **dadurch gekennzeichnet, dass** der minimal auftretende Querschnittsdurchmesser (14) des Temperaturentkopplungskörpers (6) zwischen den in dem Abschnitt (12) aufeinanderfolgenden Kühlrippen (13) von der ersten Stirnseite (7) zu der zweiten Stirnseite (8) abnimmt.

2.   Druckmittler nach Anspruch 1, wobei an der ersten Stirnseite (7) ein erster Absatz (15) ist, der einen ersten Durchmesser (16) aufweist und an der zweiten Stirnseite (8) ein zweiter Absatz (16) ist, der einen zweiten Durchmesser (18) aufweist, wobei der erste und der zweite Durchmesser unterschiedlich sind.

3.   Druckmittler nach Anspruch 1 oder 2, wobei der Kanal (9) einen Durchmesser aufweist, der im Bereich von 0,5 mm bis 2,5 mm, bevorzugt im Bereich von 1 mm bis 2 mm liegt.

4.   Druckmittler nach einem oder mehreren der vorhergehenden Ansprüche, wobei der am Scheitelpunkt (19) einer jeden Kühlrippe auftretende maximale Querschnittsdurchmesser des Temperaturentkopplungskörpers für jede Kühlrippe gleich ist.

5.   Druckmittler nach einem oder mehreren der vorhergehenden Ansprüche, wobei das Verhältnis zwischen der Länge des Kanals (9) und dem Durchmesser des Kanals (9) mindestens 50:1, bevorzugt 100:1 und besonders bevorzugt 200:1 beträgt.

6.   Druckmittler nach einem oder mehreren der vorhergehenden Ansprüche, wobei das Verhältnis zwischen der Länge des Temperaturentkopplungskörpers (6) und dem maximal auftretenden Querschnittsdurchmesser des Temperaturentkopplungskörpers (6) mindestens 2:1, bevorzugt 3:1 und besonders bevorzugt 5:1 beträgt.

7.   Drucksensor zumindest umfassend:

- einen Druckmittler (1) nach einem oder mehreren der vorhergehenden Ansprüche;
- zwei im Wesentlichen quaderförmige Prozessanschlussflansche (20); und
- zumindest eine zwischen den zwei Prozessanschlussflanschen (20) befindliche Druckmesszelle (21), wobei die Druckmesszelle (21) derart an den Druckmittler (1) angebunden ist, dass die über den Kanal (9) des Druckmittlers (1) zugeführte Übertragungsflüssigkeit (10) über einen in einem der beiden Prozessanschlussflansche (20) befindlichen Einlasskanal (24) und eine Einlasskammer (25) der Druckmesszelle (21) zugeführt oder zuführbar ist, um so anhand des übermittelten Mediendrucks ein druckabhängiges Signal zu erzeugen.

8. Drucksensor nach einem der Ansprüche 7, wobei der Druckmittler (1) im Wesentlichen mittig an einer der Prozessanschlussflanschflächen (20) angeschweißt ist.

9. Drucksensor nach Anspruch 7 oder 8, wobei der Prozessanschlussflansch (20) über den der Druckmittler (1) an die Druckmesszelle (21) angebunden ist zumindest in dem Bereich wo der Druckmittler (1) an den Prozessanschlussflansch (20) angeschweißt ist eine verstärkte Wanddicke aufweist.

10. Drucksensor nach einem der Ansprüche 7 bis 9, wobei die Druckmesszelle (21) eine Absolutdruckmesszelle, eine Relativdruckmesszelle oder eine Differenzdruckmesszelle ist.

11. Drucksensor nach einem der Ansprüche 7 bis 10, wobei der sich in dem Prozessanschlussflansch (20) befindliche Einlasskanal spezifisch zur Anbindung des Druckmittlers (1) vorgesehen ist.

**Claims**

1. Diaphragm seal (1) designed to transfer a medium pressure, comprising:

   - a metal membrane support body (2) with a surface on the medium side (3) and a process isolating diaphragm (4) which is connected to the membrane support body (2) in a pressure-tight manner along at least an edge, forming a pressure chamber (5) between the process isolating diaphragm (4) and the membrane support body (2), and
   - a metal, particularly axial-symmetric, temperature decoupling body (6) with a first front face (7) and a second front face (8) facing away from the first front face (7), as well as a channel (9) which extends between the first and the second front face and which is filled or can be filled with a transmission liquid (10) to connect the pressure chamber (5) of the membrane support body (2) fixed to the first front face with a pressure transducer (11) which can be connected to the second front face (8) in such a way that a medium pressure present at the process isolating diaphragm (4) can be transmitted to the pressure transducer (11), wherein multiple, particularly undulated, consecutive cooling ribs (13) are formed in a section (12) of the temperature decoupling body (6) on the top side or the surface, for the purpose of radiating heat, **characterized in that** the minimum cross-sectional diameter (14) of the temperature decoupling body (6) between the consecutive cooling ribs (13) in the section (12) decreases from the first front face (7) to the second front face (8).

2. Diaphragm seal as claimed in Claim 1, wherein a first shoulder (15) with a first diameter (16) is located on the first front face (7) and a second shoulder (16) with a second diameter (18) is located on the second front face (8), wherein the first and second diameters are different.

3. Diaphragm seal as claimed in Claim 1 or 2, wherein the channel (9) has a diameter which is in the range from 0.5 mm to 2.5 mm, preferably in the range from 1 mm to 2 mm.

4. Diaphragm seal as claimed in one or more of the previous claims, wherein the maximum cross-section diameter of the temperature decoupling body, occurring at the apex (19) of each cooling rib is the same for each cooling rib.

5. Diaphragm seal as claimed in one or more of the previous claims, wherein the ratio of the length of the channel (9) to the diameter of the channel (9) is at least 50:1, preferably 100:1 and particularly preferably 200:1.

6. Diaphragm seal as claimed in one or more of the previous claims, wherein the ratio of the length of the temperature decoupling body (6) and the maximum cross-section diameter of the temperature decoupling body (6) is at least 2:1, preferably 3:1 and particularly preferably 5:1.

7. Pressure sensor, comprising at least:

   - a diaphragm seal (1) as claimed in one or more of the previous claims;
   - two process connection flanges (20) that are essentially cube-shaped; and
   - at least a pressure measuring cell (21) located between the two process connection flanges (20), wherein the pressure measuring cell (21) is connected to the diaphragm seal (1) in such a way that the transmission liquid (10) supplied via the channel (9) of the diaphragm seal (1) is or can be supplied to the pressure measuring cell (21) via an inlet channel (24) situated in one of the two process connection flanges (20) and an inlet chamber (25) in order to generate a pressure-dependent signal on the basis of the transmitted medium pressure.

8. Pressure sensor as claimed in Claim 7, wherein the diaphragm seal (1) is welded essentially in the center to one of the process connection flange surfaces (20).

9. Pressure sensor as claimed in Claim 7 or 8, wherein the process connection flange (20), by means of which the diaphragm seal (1) is connected to the pressure measuring cell (21), has a reinforced wall thickness at least in the area where the diaphragm seal (1) is welded onto the process connection flange (20).

10. Pressure sensor as claimed in one of the Claims 7 to 9, wherein the pressure measuring cell (21) is an absolute pressure measuring cell, a relative pressure measuring cell or a differential pressure measuring cell.

11. Pressure sensor as claimed in one of the Claims 7 to 10, wherein the inlet channel located in the process connection flange (20) is provided specifically for the integration of the diaphragm seal (1).

**Revendications**

1. Séparateur (1) destiné à la transmission d'une pression d'un produit, comprenant :

   - un corps de support de membrane (2) métallique avec une surface côté produit (3) et une membrane de séparation (4) qui est reliée au corps de support de membrane (2) de manière étanche à la pression le long d'au moins un bord, formant une chambre de pression (5) entre la membrane de séparation (4) et le corps de support de membrane (2), et
   - un corps de découplage thermique (6) métallique, notamment à symétrie axiale, avec une première face d'extrémité (7) et une deuxième face d'extrémité (8) opposée à la première face d'extrémité (7), ainsi qu'un canal (9) qui s'étend entre la première et la deuxième face d'extrémité et qui est rempli ou peut être rempli avec un liquide de transmission (10) pour relier la chambre de pression (5) du corps de support de membrane (2) fixé à la première face d'extrémité, avec un capteur de pression (11) pouvant être relié à la deuxième face d'extrémité (8), de telle sorte qu'une pression de produit présente sur la membrane de séparation (4) peut être transmise au capteur de pression (11), plusieurs ailettes de refroidissement successives, notamment ondulées, étant formées dans une section (12) du corps de découplage thermique (6), sur la face supérieure ou la surface, afin de faire rayonner la chaleur, **caractérisé en ce que** le diamètre de section transversale minimum (14) du corps de découplage thermique (6) entre les ailettes de refroidissement successives (13) dans la section (12) diminue de la première face d'extrémité (7) à la deuxième face d'extrémité (8).

2. Séparateur selon la revendication 1, pour lequel à la première face d'extrémité (7) se trouve un premier épaulement (15) présentant un premier diamètre (16) et à la deuxième face d'extrémité (8) se trouve un deuxième épaulement (16) présentant un deuxième diamètre (18), le premier et le deuxième diamètre étant différents.

3. Séparateur selon la revendication 1 ou 2, pour lequel le canal (9) présente un diamètre qui est dans la gamme de 0,5 mm à 2,5 mm, de préférence dans la gamme de 1 mm à 2 mm.

4. Séparateur selon l'une ou plusieurs des revendications précédentes, pour lequel le diamètre maximal de la section transversale du corps de découplage thermique apparaissant au sommet (19) de chaque ailette de refroidissement est le même pour chaque ailette de refroidissement.

5. Séparateur selon l'une ou plusieurs des revendications précédentes, pour lequel le rapport entre la longueur du canal (9) et le diamètre du canal (9) est d'au moins 50:1, de préférence 100:1 et particulièrement de préférence 200:1.

6. Séparateur selon l'une ou plusieurs des revendications précédentes, pour lequel le rapport entre la longueur du corps de découplage thermique (6) et le diamètre maximal de la section transversale du corps de découplage thermique (6) est d'au moins 2:1, de préférence 3:1 et particulièrement de préférence 5:1.

7. Capteur de pression, comprenant au moins :

   - un séparateur (1) selon l'une ou plusieurs des revendications précédentes ;
   - deux brides de raccordement au process (20) pour l'essentiel en forme de parallélépipède ; et
   - au moins une cellule de mesure de pression (21) située entre les deux brides de raccordement au process (20), la cellule de mesure de pression (21) étant reliée au séparateur (1) de telle sorte que le liquide de transmission (10) amené par le canal (9) du séparateur (1) est ou peut être amené à la cellule de mesure de pression (21) par un canal d'entrée (24) situé dans l'une des deux brides de raccordement au process (20) et une chambre d'entrée (25), afin de générer un signal dépendant de la pression sur la base de la pression de produit transmise.

8. Capteur de pression selon la revendication 7, pour lequel le séparateur (1) est soudé pour l'essentiel au centre de l'une des surfaces de bride de raccordement au process (20).

**9.** Capteur de pression selon la revendication 7 ou 8, pour lequel la bride de raccordement au process par l'intermédiaire de laquelle le séparateur (1) est relié à la cellule de mesure de pression (21) présente une épaisseur de paroi renforcée au moins dans la zone où le séparateur (1) est soudé à la bride de raccordement au process (20).

**10.** Capteur de pression selon l'une des revendications 7 à 9, pour lequel la cellule de mesure de pression (21) est une cellule de mesure de pression absolue, une cellule de mesure de pression relative ou une cellule de mesure de pression différentielle.

**11.** Capteur de pression selon la revendication 7 à 10, pour lequel le canal d'entrée situé dans la bride de raccordement au process (20) est prévu spécialement pour l'intégration du séparateur (1).

Fig. 1

Fig. 2a

Fig. 2b

Fig. 3

Fig. 4a

Fig. 4b

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10200604994